# EUROPÄISCHE PATENTSCHRIFT

(11) **EP 3 502 015 B1**
(45) Veröffentlichungstag und Bekanntmachung des Hinweises auf die Patenterteilung: **07.06.2023**
(21) Anmeldenummer: 18211510.5
(22) Anmeldetag: 11.12.2018
(51) Int. Cl.: B65G 23/14

(54) **FÖRDERVORRICHTUNG**
CONVEYING DEVICE
DISPOSITIF DE TRANSPORT

(30) Priorität: 21.12.2017 CH 15952017
(43) Veröffentlichungstag der Anmeldung: 26.06.2019
(73) Patentinhaber: FERAG AG, 8340 Hinwil (CH)
(72) Erfinder: Brunschwiler, Othmar, 9553 Bettwiesen (CH); Beutler, Simon, 8632 Tann (CH)
(74) Vertreter: Rentsch Partner AG

(56) Entgegenhaltungen:
- EP-A1- 0 564 710
- EP-A1- 2 921 434
- FR-A- 1 469 624
- US-A- 5 007 525

## Beschreibung

### GEBIET DER ERFINDUNG

Die vorliegende Erfindung betrifft eine Fördervorrichtung mit einer Mehrzahl von in einer Förderbahn förderbaren Transporteinheiten und einer mit den Transporteinheiten zum Antrieb der Transporteinheiten lösbar in Eingriff bringbaren Förderkette.

### HINTERGRUND DER ERFINDUNG

In Fördersystemen mit Kettenantrieben stellt die Geräuschentwicklung ein bekanntes Problem dar. Hauptsächlich werden die Geräusche durch das Schlagen und/oder Schleifen von Kettengliedern auf Kettenrädern erzeugt, wobei nebst Umlenkbewegungen auch Schwingungen der Kette die unerwünschten Schlaggeräusche verursachen. Die Geräusche können dabei durch die Kollision der involvierten Metallteile insbesondere bei hohen Fördergeschwindigkeiten zu inakzeptablen Lärmpegeln führen. Aufgrund der hohe Verschleissbeständigkeit und Belastbarkeit werden jedoch Ketten aus Metall bevorzugt.

Im Stand der Technik werden daher verschiedene Lösungen vorgeschlagen, um die Geräusche in Fördersystemen mit Kettenantrieben zu reduzieren.

Die DE3101355 C2 beschreibt eine Rollenbahn, bestehend aus in einem Rollenbahngestell hintereinander drehbar gelagerten und mindestens zum Teil mittels eines Kettenantriebes angetriebenen Tragrollen, wobei der Kettenantrieb aus auf den Tragrollenachsen der Tragrollen angeordneten Kettenrädern und einer mit diesen in Eingriff stehenden Antriebskette besteht, die innerhalb eines der Längsholme des Rollenbahngestells verläuft, wobei das gezogene Trum der Antriebskette innerhalb einer am Längsholm befestigten geschlossenen Kammer verläuft. Die Kammer besteht aus einem geräuschisolierenden Kunststoffhohlprofil, in dem die Antriebskette mit ihrem gezogenen Trum geführt ist. Die Kammer ist allseitig von schallisolierenden Kunststoffwänden begrenzt, wobei weiterhin eine Führung der Kette in dem Hohlprofil gegeben ist. Demnach werden Schleifgeräusche an den Seitenwänden und Schlaggeräusche nach oben verhindert.

Die EP2921434 A1 beschreibt eine Eintaktvorrichtung zu einer Übergabe von Einzelwagen eines Gravitationsförderers an ein getaktet förderndes Fördermittel des Gravitationsförderers, wobei die Eintaktvorrichtung derart ausgebildet ist, dass die Einzelwagen einem Takt des Fördermittels zugeordnet werden können. Der Gravitationsförderer umfasst optional eine Kette mit Mitnehmern als Fördermittel.

### DARSTELLUNG DER ERFINDUNG

Bei der automatisierten Förderung von Transportgütern wie Waren oder Druckprodukten haben sich insbesondere Hängeförderer mit in einer Förderbahn bewegbaren Transporteinheiten, z.B. an einer Laufschiene förderbaren Laufwagen, u.a. aufgrund der räumlichen Anpassbarkeit der Förderstrecken und der Eignung für Puffer oder Zwischenspeicher bewährt. In bestimmten Förderstrecken sind dabei hohe Fördergeschwindigkeiten zur Erhöhung der Förderkapazität erwünscht. Ferner werden zur Sortierung oder zur Zwischenspeicherung der Transportgüter in der Regel Weichensysteme eingesetzt, welche eine Vielzahl von Weichen umfassen können. Werden die Transporteinheiten dabei mittels einer Förderkette angetrieben, so ist es erwünscht, die durch die Förderkette erzeugten Geräusche zu reduzieren.

Es ist daher Aufgabe der Erfindung, eine Fördervorrichtung bereitzustellen, welche den Stand der Technik bezüglich der Reduktion der durch eine Förderkette erzeugten Geräusche mindestens teilweise verbessert.

Diese Aufgabe wird durch die Merkmale des unabhängigen Anspruchs gelöst. Vorteilhafte Ausgestaltungen der Erfindung sind in den abhängigen Ansprüchen und in der vorliegenden Beschreibung und den Figuren gegeben.

Die Erfindung betrifft eine Fördervorrichtung, umfassend eine Förderbahn und eine Mehrzahl von in der Förderbahn förderbaren Transporteinheiten, mindestens zwei erste Führungsrollen und eine Förderkette, welche über die mindestens zwei ersten Führungsrollen läuft und Mitnehmer aufweist, über welche die Förderkette mit den Transporteinheiten lösbar in Eingriff bringbar ist. Die Fördervorrichtung umfasst ferner einen über die mindestens zwei ersten Führungsrollen mit der Förderkette mitlaufenden Riemen, wobei der Riemen im jeweiligen Bereich der ersten Führungsrollen jeweils derart zwischen erster Führungsrolle und Förderkette angeordnet ist, dass die Förderkette am Riemen anliegt.

Durch das Anliegen der Förderkette am Riemen wird eine Geräuschreduktion u.a. dadurch erreicht, dass der direkte Kontakt zwischen der Förderkette und der Führungsrolle beim Laufen der Förderkette über die Führungsrolle ganz oder zumindest teilweise vermieden wird. Ausserdem können Schläge der Förderkette auf die Führungsrolle verhindert oder gedämpft werden. Das Mitlaufen des Riemens mit der Förderkette bietet den Vorteil, dass der Riemen und die Förderkette keine oder wenig unerwünschte Relativbewegungen zueinander ausführen, wodurch u.a. der Verschleiss und/oder Schlagbewegungen zwischen Riemen und Förderkette minimiert werden können. Vorzugsweise liegt die Förderkette auch im Bereich zwischen den Führungsrollen am Riemen an, was u.a. den Vorteil bietet, dass unerwünschte Schwingungen der Förderkette reduziert bzw. abgedämpft werden können.

Der Riemen gemäss der vorliegenden Erfindung bietet daher eine kostengünstige und effiziente Lösung für eine Reduktion der durch eine Förderkette erzeugten Geräusche in einer Fördervorrichtung. Unabhängig von der Anzahl der involvierten Führungsrollen kann eine Geräuschreduktion mit einem Riemen für mehrere oder alle Führungsrollen erreicht werden, ohne dass zwingend für jede Führungsrolle separate Dämpfungselemente bereitgestellt werden müssen. Auf Grund der niedrigen Kosten ist es zudem möglich, bei einer Änderung der Förderstrecke auf einfache Weise einen bestehenden Riemen mit einem neuen Riemen mit angepasster Länge in die Fördervorrichtung einzubauen.

Im Rahmen der Erfindung ist es auch denkbar, zwei oder mehrere parallele Riemen und entsprechende Förderketten vorzusehen. Es ist auch denkbar, einen breiten Riemen vorzusehen, an welchem mehrere parallele Förderketten anliegen können. Die Anzahl Riemen und/oder Förderketten kann z.B. je nach Anforderungen an die Zuglast angepasst werden.

In einer Ausgestaltung ist der Riemen derart ausgebildet, dass die Förderkette jeweils beabstandet von den ersten Führungsrollen über die ersten Führungsrollen läuft.

Durch das beabstandete Laufen der Förderkette über die ersten Führungsrollen kann ein direkter Kontakt zwischen Förderkette und ersten Führungsrollen komplett vermieden werden, was vorteilhafterweise zu einer optimierten Geräuschreduktion führt. Vorzugsweise weist der Riemen eine ausreichende Höhe für die Beabstandung der Förderkette zu den ersten Führungsrollen auf.

In einer Ausgestaltung ist die Förderkette ausgebildet, mit einer Fördergeschwindigkeit über die mindestens zwei ersten Führungsrollen zu laufen und der Riemen ist ausgebildet, mit einer im Vergleich zur Fördergeschwindigkeit der Förderkette kleineren oder gleichen Geschwindigkeit mit der Förderkette mitzulaufen.

Insbesondere kann zwischen Riemen und Förderkette ein Schlupf auftreten, was den Vorteil bietet, dass Änderungen in der Fördergeschwindigkeit oder in der Förderstrecke aufgenommen werden können, ohne dass z.B. unerwünschte Schwingungen auftreten.

In einer Ausgestaltung ist die Länge des Riemens geringer oder länger als die Länge der Förderkette. Durch den Unterschied zwischen der Fördergeschwindigkeit der Förderkette und der Geschwindigkeit des Riemens können Längenunterschiede zwischen Riemen und Förderkette aufgenommen werden. Zum Beispiel können die Förderkette oder der Riemen über zusätzliche Führungsrollen oder Kettenräder zumindest abschnittsweise entlang unterschiedlichen Strecken laufen. Die Förderkette und der Riemen bieten den Vorteil, dass eine variable Ausgestaltung der Strecken und Geschwindigkeiten für die Förderkette und/oder den Riemen ermöglicht wird. In der Regel sind Förderkette und Riemen umlaufend ausgebildet, wobei hierfür die variable Ausgestaltung besonders von Vorteil ist.

In einer Ausgestaltung weist die Förderkette Kettenglieder auf, welche reibschlüssig am Riemen anliegen.

Durch das reibschlüssige Anliegen von Kettengliedern der Förderkette auf dem Riemen kann erreicht werden, dass der Riemen durch die Förderbewegung der Förderkette mitgenommen wird und mit der Förderkette mitläuft. Die Förderkette liegt daher vorzugsweise zumindest teilweise reibschlüssig am Riemen an und muss nicht über die gesamte Länge der Förderkette reibschlüssig am Riemen anliegen. Vorzugsweise sind Förderkette und Riemen derart angeordnet, dass die Kettenglieder der Förderkette im Bereich der ersten Führungsrollen am Riemen reibschlüssig anliegen. Durch den Reibschluss zwischen Förderkette und Riemen kann ein Zug auf die Förderkette über den Riemen auf ein Drehmoment der ersten Führungsrollen umgesetzt werden.

In einer Ausgestaltung ist die Förderkette als Rollenkette ausgebildet und liegt mit Rollen am Riemen an.

In der Regel weist die Förderkette Kettenglieder umfassend Rollen und Laschen auf. Vorzugsweise liegen die Kettenglieder im Bereich der ersten Führungsrollen über die Rollen reibschlüssig am Riemen an.

In einer Ausgestaltung ist der Riemen derart dimensioniert, dass die Förderkette im Bereich der ersten Führungsrollen quer zur Förderrichtung über dem Riemen hinausstehend am Riemen anliegt.

Die Förderkette kann beidseitig oder einseitig quer zur Förderrichtung über dem Riemen hinausstehen.

Vorzugsweise ist der Riemen derart ausgebildet, dass die Auflagefläche der Förderkette auf dem Riemen im Bereich der ersten Führungsrollen kleiner als die Breite der Förderkette ist.

In einer Ausgestaltung ist die Breite des Riemens kleiner als die Breite der Förderkette.

Bei einer Rollenkette liegt die Förderkette im Bereich der ersten Führungsrollen vorzugsweise derart über die Rollen am Riemen an, dass die Förderkette mit den Laschen der Kettenglieder quer zur Förderrichtung über dem Riemen hinaussteht. Vorzugsweise weist der Riemen dabei eine ausreichende Höhe auf, so dass die Laschen die erste Führungsrolle nicht berühren.

In einer Ausgestaltung weisen die ersten Führungsrollen jeweils mindestens eine Nut auf, in welche der Riemen zumindest teilweise aufnehmbar ist.

Vorzugsweise ist der Riemen formschlüssig in der Nut aufnehmbar, was für einen besseren Halt sorgt und eine sichere Führung des Riemens um die ersten Führungsrollen auch bei hohen Fördergeschwindigkeiten erlaubt.

In einer Ausgestaltung weisen die ersten Führungsrollen eine im Querschnitt abgestufte Nut auf, umfassend eine äussere Nut zur Aufnahme der Förderkette und eine in der äusseren Nut ausgebildete innere Nut zur Aufnahme des Riemens.

In einer Ausgestaltung ist der Riemen zumindest teilweise aus einem Elastomer hergestellt.

Mit der Wahl eines geeigneten Elastomers kann insbesondere der Reibschluss zwischen Förderkette und Riemen optimiert werden.

In einer Ausgestaltung weist der Riemen eines der folgenden Querschnittprofile auf: trapezförmig, trapezförmig mit mindestens einer gewölbten Seite, kreisförmig, oval, hantelförmig, rechteckig, rechteckig mit mindestens einer gewölbten Seite.

Insbesondere kann mindestens eine Seite des Riemens konkav oder konvex ausgebildet sein.

Bei einem Riemen mit einer konkaven Seite kann die konkave Seite eine Vertiefung ausbilden, in welche die Förderkette aufnehmbar ist.

Vorzugsweise ist der Riemen als Rundriemen, Flachriemen, Keilriemen oder Keilrippenriemen ausgebildet.

In einer Ausgestaltung weist der Riemen Ausnehmungen, vorzugsweise in regelmässigen Abständen, auf. Die Ausnehmungen sind insbesondere von Vorteil, wenn die Förderkette mittels eines Kettenrads mit Zähnen angetrieben wird, da dann der Riemen zwischen Kettenrad und Förderkette angeordnet ebenfalls über das Kettenrad mitlaufen kann, wobei die Zähne in die Ausnehmungen greifen können.

In einer Ausgestaltung weist der Riemen einen Mantel und einen Kern auf, welche aus unterschiedlichem Material hergestellt sind.

Mit der Wahl von geeigneten Materialien für Mantel und Kern kann die Belastbarkeit des Riemens erhöht werden. Zum Beispiel kann der Mantel zumindest teilweise aus einem Elastomer und der Kern zumindest teilweise aus einem Kunststoff hergestellt sein.

In einer Ausgestaltung weist die Fördervorrichtung mindestens eine zweite Führungsrolle auf, über welche die Förderkette läuft und welche gegenläufig zu den ersten Führungsrollen angeordnet ist.

Mit den ersten und zweiten Führungsrollen kann die Förderkette je nach Bedarf in verschiedene Richtungen umgelenkt werden und die Fördervorrichtung flexibel an den Einsatz in einer Förderanlage angepasst werden. Durch die erreichte Geräuschreduktion kann die Fördervorrichtung mit einer Vielzahl von Führungsrollen ausgestattet werden, ohne dass es zu einer störenden Lärmentwicklung kommt.

In einer Ausgestaltung weist die Fördervorrichtung einen über die mindestens eine zweite Führungsrolle mit der Förderkette mitlaufenden Aussenriemen auf, welcher im jeweiligen Bereich der mindestens einen zweiten Führungsrolle derart zwischen zweiter Führungsrolle und Förderkette angeordnet ist, dass die Förderkette am Aussenriemen anliegt.

Der Aussenriemen bietet den Vorteil, dass auch für die mindestens eine zweite Führungsrolle eine Geräuschreduktion wie bei den ersten Führungsrollen erreicht werden kann. Der Aussenriemen kann ausserdem eine verbesserte Dämpfung von Schwingungen der Förderkette bereitstellen. Vorzugsweise weist die Förderkette Kettenglieder auf, welche im Bereich der zweiten Führungsrolle reibschlüssig am Aussenriemen anliegen.

In einer Ausgestaltung weist die mindestens eine zweite Führungsrolle ein Dämpfungselement, vorzugsweise in Form eines Rings, auf, welches in einer Nut des Kettenrads derart aufgenommen ist, dass die Förderkette beim Laufen über die zweite Führungsrolle zumindest teilweise am Dämpfungselement anliegt.

In einer Ausgestaltung weist die Fördervorrichtung ein Kettenrad zum Antrieb der Förderkette auf.

Vorzugsweise wird der Riemen berührungslos am Kettenrad vorbeigeführt.

Insbesondere kann dies durch unterschiedliche Längen des Riemens und der Förderkette sowie unterschiedlichen Geschwindigkeiten ermöglicht werden. In der Regel weist das Kettenrad Zähne auf, welche bei Kontakt mit dem Riemen zu Verschleiss führen können. Durch das berührungslose Vorbeiführen kann der Verschleiss des Riemens aufgrund der Zähne des Kettenrads vermieden werden. Es ist aber auch denkbar, dass das Kettenrad ohne Zähne ausgebildet ist.

In einer Ausgestaltung ist das Kettenrad zwischen Förderkette und Riemen angeordnet.

Alternativ kann der Riemen über das Kettenrad mit der Förderkette mitlaufen, wobei der Riemen im Bereich des Kettenrads vorzugsweise derart zwischen dem Kettenrad und der Förderkette angeordnet ist, dass die Förderkette am Riemen anliegt. Der Riemen kann daher vorteilhafterweise auch für das Laufen der Förderkette über das Kettenrad eine Geräuschreduktion ermöglichen.

Bei einem Kettenrad mit Zähnen kann der Riemen Ausnehmungen in regelmässigen Abständen aufweisen, in welche die Zähne beim Laufen des Riemens über das Kettenrad eingreifen können. Alternativ können zwei Riemen jeweils seitlich an den Zähnen vorbeigeführt werden.

In einer Ausgestaltung weist das Kettenrad ein Dämpfungselement, vorzugsweise einen O-Ring, auf, welches in einer Nut des Kettenrads derart aufgenommen ist, dass die Förderkette beim Laufen über das Kettenrad zumindest teilweise am Dämpfungselement anliegt.

Das Dämpfungselement bietet den Vorteil, dass die direkte Kontaktfläche zwischen der Förderkette und des Kettenrads beim Laufen der Förderkette über das Kettenrad reduziert und so eine Geräuschreduktion erreicht werden kann. Vorteilhafterweise kommt die Förderkette beim Laufen der Förderkette über das Kettenrad zuerst oder ausschliesslich mit dem Dämpfungselement in Kontakt, so dass Schläge abgedämpft werden können. Das Dämpfungselement kann zumindest teilweise aus einem Elastomer oder einem Kunststoff hergestellt sein.

Vorzugsweise ist die Förderkette dabei als Rollenkette ausgebildet und das Kettenrad weist zwei Dämpfungselemente, vorzugsweise O-Ringe, auf, welche jeweils in einer Nut des Kettenrads derart aufgenommen sind, dass die Förderkette über Laschen an den Dämpfungselementen anliegt. Das Kettenrad weist vorzugsweise Zähne auf, welche zwischen den Dämpfungselementen angeordnet sind.

In einer Ausgestaltung umfasst die Fördervorrichtung mindestens eine Weiche, wobei die Förderkette mit Transporteinheiten in einer abzweigenden Förderbahn der Weiche in Eingriff bringbar ist.

Die Fördervorrichtung mit dem Riemen ist für Weichen besonders vorteilhaft, da die Förderkette bei Weichen in der Regel mehrere Umlenkungen vornehmen muss, was zu einer erhöhten Geräuschentwicklung führt. Mit dem Riemen gemäss der Erfindung können die mit Weichen und zusätzlichen Umlenkungen der Förderkette einhergehenden Geräusche reduziert werden.

In einer Ausgestaltung ist die Fördervorrichtung als Steigförderer oder als Abwärtsförderer ausgebildet.

Die Fördervorrichtung kann auf vielseitige Art als Förderer innerhalb einer Förderanlage eingesetzt werden. Die Fördervorrichtung ist insbesondere für Förderer von Vorteil, bei welchen Führungsrollen oder Kettenräder zum Einsatz kommen und eine Geräuschreduktion daher besonders erwünscht ist.

In einer Ausgestaltung sind die mindestens zwei ersten Führungsrollen und/oder ist die mindestens eine zweite Führungsrolle zumindest teilweise aus Kunststoff hergestellt.

Vorzugsweise sind die mindestens zwei ersten Führungsrollen und/oder ist die mindestens eine zweite Führungsrolle zahnlos ausgebildet.

In einer vorteilhaften Ausgestaltung ist die Fördervorrichtung als Hängefördervorrichtung ausgebildet.

Vorzugsweise ist die Förderbahn als Laufschiene ausgebildet und die Transporteinheiten sind als an der Laufschiene förderbare Laufwagen ausgebildet.

Die Förderbahn kann in Varianten z.B. als Kanal, Führung, Rollenteppich, Laufschiene, Förderband, Modulband o.ä. ausgebildet sein.

Die Transporteinheiten können in Varianten Schalen, Tablette, Körbe, Werkzeugträger, Laufwagen, Kompositionen, insbesondere endlich verkettete oder zusammengeschaltete Transporteinheiten, Behälter o.ä. umfassen.

### LISTE DER FIGUREN

Ausführungsformen der Erfindung werden anhand der nachfolgenden Figuren und der dazugehörigen Beschreibung näher erläutert. Es zeigen:
- Fig. 1: eine Ausführungsform einer Hängefördervorrichtung von unten;
- Fig. 2: die Hängefördervorrichtung aus Fig. 1 in einer perspektivischen Ansicht von unten;
- Fig. 3a: eine Sicht einer zweiten Führungsrolle gemäss Fig. 1 von unten;
- Fig. 3b: eine Schnittansicht der zweiten Führungsrolle aus Fig. 3a entlang der Linie A-A;
- Fig. 3c: eine Seitenansicht der zweiten Führungsrolle aus Fig. 3a;
- Fig. 4a-e: Schnittansichten von verschiedenen Ausführungsformen von Riemen;
- Fig. 5: eine Draufsicht einer ersten Führungsrolle mit einer Förderkette und einem Riemen sowie Seitenansichten einer Förderkette mit einer geschnittenen Darstellung eines Riemens;
- Fig. 6a: eine Draufsicht eines Kettenrades gemäss Fig. 1;
- Fig. 6b: eine Schnittansicht des Kettenrades aus Fig. 6a entlang der Linie B-B;
- Fig. 6c: eine Seitenansicht des Kettenrades aus Fig. 6a;
- Fig. 7: eine Draufsicht einer Ausführungsform eines Riemens mit Ausnehmungen; und
- Fig. 8: eine Frontalansicht einer Ausführungsform einer Transporteinheit.

### BESCHREIBUNG EXEMPLARISCHER AUSFÜHRUNGSFORMEN

Um die Erfindung zu veranschaulichen, werden bevorzugte Ausführungsformen mit Bezug auf die Figuren näher beschrieben.

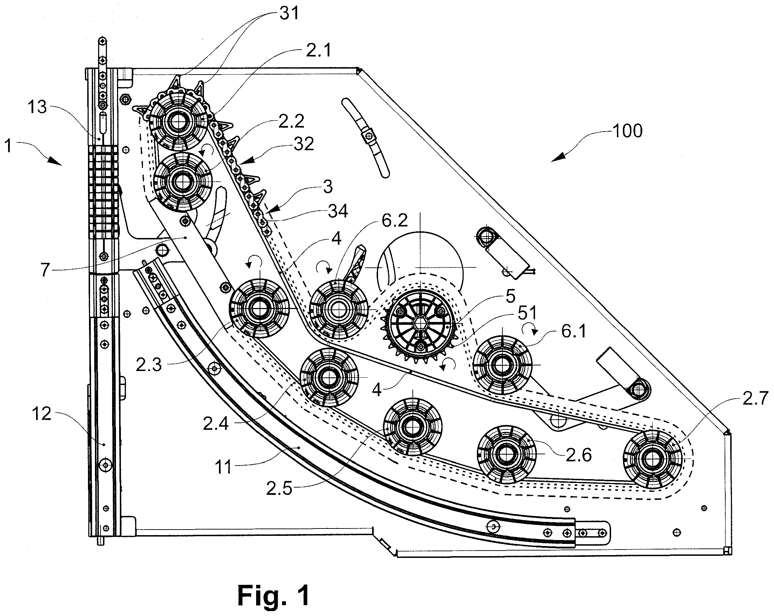

Fig. 1 zeigt eine Ausführungsform einer Hängefördervorrichtung 100 in einer Ansicht von unten, die Hängefördervorrichtung 100 umfassend Laufschienen 11, 12, 13, welche eine Weiche 1 bilden, sieben erste Führungsrollen 2.1-2.7 und eine Förderkette 3, welche über die ersten Führungsrollen 2.1-2.7 läuft. Die Förderkette 3 ist als Rollenkette ausgebildet und weist Mitnehmer 31 auf, welche an Kettengliedern 32 der Förderkette 3 angeordnet sind. Über die Mitnehmer 31 ist die Förderkette 3 mit in den Laufschienen 11, 12, 13 förderbaren Laufwagen (nicht gezeigt in Fig. 1) lösbar in Eingriff bringbar. Die Hängefördervorrichtung 100 umfasst ferner einen über die ersten Führungsrollen 2.1-2.7 mit der Förderkette 3 mitlaufenden Riemen 4. Der Riemen 4 ist im jeweiligen Bereich der ersten Führungsrollen 2.1-2.7 jeweils derart zwischen den ersten Führungsrollen 2.1-2.7 angeordnet, dass die Förderkette 3 am Riemen 4 anliegt. Der Riemen 4 ist aus einem Elastomer hergestellt.

Die Hängefördervorrichtung 100 umfasst weiter zwei zweite Führungsrollen 6.1, 6.2, über welche die Förderkette 3 läuft. Die Förderkette 3 sowie der Riemen 4 sind umlaufend ausgebildet, wobei die ersten Führungsrollen 2.1-2.7 innerhalb der umlaufenden Förderkette 3 bzw. des umlaufenden Riemens 4 angeordnet sind und die zweiten Führungsrollen 6.1, 6.2 ausserhalb der umlaufenden Förderkette 3 bzw. des umlaufenden Riemens 4 angeordnet sind. Wie mit den gebogenen Pfeilen angedeutet, sind die zweiten Führungsrollen 6.1, 6.2 daher gegenläufig zu den ersten Führungsrollen 2.1-2.7 angeordnet.

Wie in der Fig. 1 ersichtlich, liegt die Förderkette 3 ausser im Bereich zwischen den zwei zweiten Führungsrollen 6.1, 6.2 am Riemen 4 an. Im Bereich zwischen den zwei zweiten Führungsrollen 6.1, 6.2 ist ein Kettenrad 5 angeordnet, welches über Zähne 51 mit der Förderkette 3 in Eingriff steht und die Förderkette antreibt. Das Kettenrad 5 wiederum ist zwischen der Förderkette 3 und dem Riemen 4 angeordnet, wobei der Riemen 4 berührungslos am Kettenrad 5 vorbeigeführt wird. Durch die Anordnung mit den zwei zweiten Führungsrollen 6.1, 6.2 wird daher die Förderkette 3 auf eine zusätzliche Schlaufe geführt, in welcher das Kettenrad 5 zum Antrieb der Förderkette 3 angeordnet ist. In der Fig. 1 sind die Förderkette 3 und die Mitnehmer 31 zur besseren Übersicht nicht durchgängig über die gesamte umlaufende Strecke gezeichnet, sondern mittels gestrichelten Linien der besseren Übersichtlichkeit halber nur angedeutet. Die gestrichelten Linien, welche die Förderkette 3 und die Mitnehmer 31 andeuten, werden im Bereich zwischen den Führungsrollen 2.2 und 2.3 durch eine Abdeckung 7, welche die Förderkette 3 und die Mitnehmer 31 verdeckt, unterbrochen.

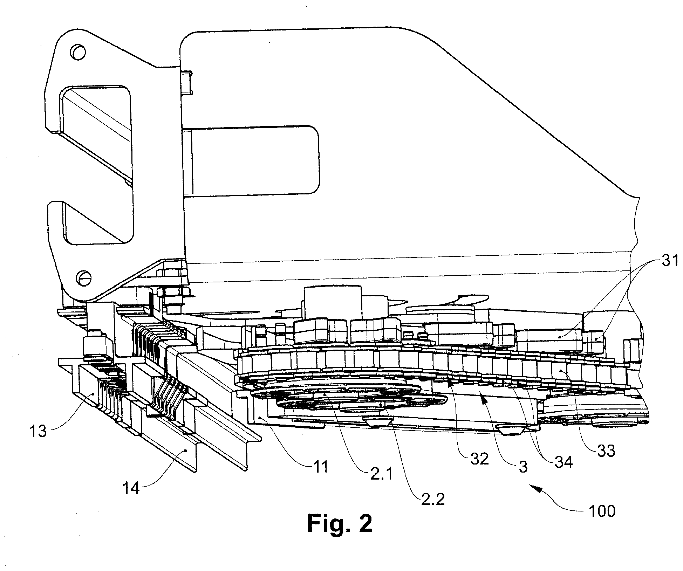

Fig. 2 zeigt eine perspektivische Ansicht der Hängefördervorrichtung 100 aus Fig. 1 von unten. In der Fig. 2 ist zu sehen, dass die Förderkette 3 als eine Rollenkette mit Kettengliedern 32 und Rollen 33 sowie Laschen 34 ausgebildet ist. Die Förderkette 3 (bzw. die Kettenglieder 32) liegt über die Rollen 33 am Riemen (von der Förderkette 3 verdeckt nicht sichtbar in Fig. 2) an, wobei die Kettenglieder 32 der Förderkette 3 insbesondere im Bereich der ersten Führungsrollen 2.1-2.7 über die Rollen 33 reibschlüssig am Riemen anliegen.

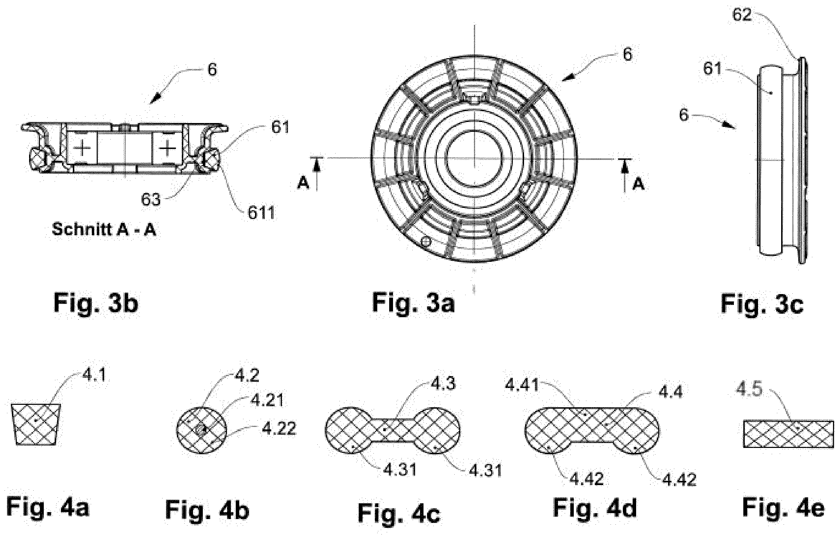

Fig. 3a zeigt eine Sicht einer zweiten Führungsrolle 6 gemäss Fig. 1 von unten. Die Führungsrolle 6 ist aus einem Kunststoff durch Spritzguss hergestellt und ist zahnlos ausgebildet.

Fig. 3b zeigt eine Schnittansicht der zweiten Führungsrolle 6 aus Fig. 3a entlang der Schnittlinie A-A. Die Führungsrolle 6 weist eine Nut 63 auf, in welche ein Dämpfungselement 61 aufgenommen ist. Das Dämpfungselement 61 weist ein trapezförmiges Querschnittprofil mit einer gewölbten Seite 61 1 auf, welche eine Auflagefläche für die Förderkette bildet.

Fig. 3c zeigt eine Seitenansicht der zweiten Führungsrolle 6 aus Fig. 3a mit dem Dämpfungselement 61, welches in Form eines Rings ausgebildet ist. Die Förderkette liegt beim Laufen über die zweite Führungsrolle 6 am Dämpfungselement 61 an, wobei das Dämpfungselement 61 eine ausreichende Höhe aufweist, so dass die Förderkette beabstandet von der zweiten Führungsrolle 6 über die zweite Führungsrolle 6 läuft. Die zweite Führungsrolle 6 weist einen Flansch 62 zum Verhindern des Herabfallens der Förderkette auf.

Aus den Figuren ist ersichtlich, dass eine Schnittdarstellung oder Seitendarstellung einer ersten Führungsrolle mit dem Riemen von derjenigen Seite her, auf welcher der Riemen auf der ersten Führungsrolle aufliegt, d.h. die Förderkette und der Riemen durch die Führungsrolle umgelenkt werden, analog wie zu Fig. 3b aussehen würde. Entsprechend können die Figuren 3a-3c als Darstellungen der ersten Führungsrolle herangezogen werden.

Fig. 4a zeigt eine Schnittansicht einer Ausführungsform eines Riemens 4.1. Der Riemen 4.1 weist ein trapezförmiges Querschnittprofil auf und bildet einen Keilriemen aus.

Fig. 4b zeigt eine Schnittansicht einer weiteren Ausführungsform eines Riemens 4.2 mit einem kreisförmigen Querschnittprofil, welcher einen Rundriemen ausbildet. Der Riemen 4.2 weist einen Kern 4.21 aus einem Kunststoff und einen Mantel 4.22 aus einem Elastomer auf.

Eine weitere Ausführungsform eines Riemens 4.3 ist in Fig. 4c gezeigt. Der Riemen 4.3 weist ein hantelförmiges Querschnittprofil mit kreisförmigen Seiten 4.31 auf. Die kreisförmigen Seiten 4.31 können eine verteilte Auflagefläche für eine breite Förderkette oder zwei Auflageflächen für zwei parallel laufende Förderketten ausbilden. Die kreisförmigen Seiten 4.31 können in zwei geeigneten Nuten einer Führungsrolle aufgenommen werden.

Eine Variante eines Riemens 4.4 mit einem hantelförmigen Querschnittprofil ist in Fig. 4d gezeigt. Die Seiten 4.42 des Riemens 4.4 weichen insofern von der Form der Seiten des Riemens 4.3 aus Fig. 4c ab, als der Riemen 4.4 eine flache Auflagefläche 4.41 aufweist. Durch diese Form kann der Riemen 4.4 durch Aufnahme der der unteren Bereiche der Seiten 4.42 in geeigneten Nuten in einer Führungsrolle gehalten werden und durch die flache Oberseite eine breite Auflagefläche für eine Förderkette ausbilden.

Fig. 4e zeigt eine weitere Ausführungsform eines Riemens 4.5, welcher mit einem rechteckigen Querschnittprofil als Flachriemen ausgebildet ist.

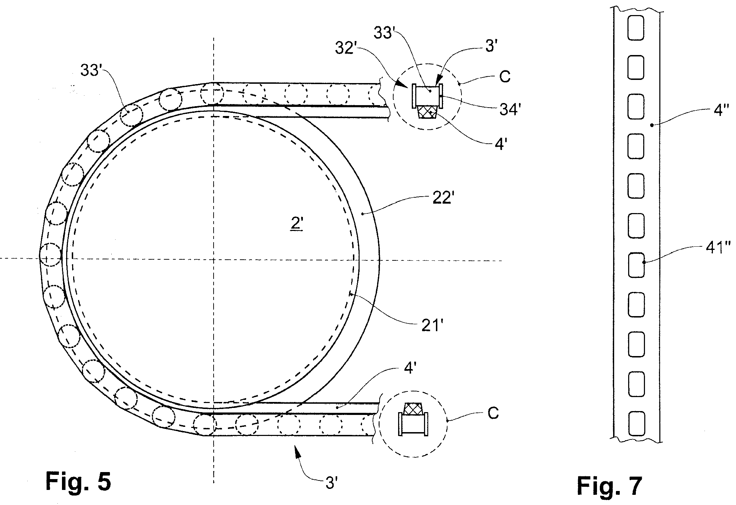

Fig. 5 zeigt eine Draufsicht einer ersten Führungsrolle 2' mit einer Förderkette 3' und einem Riemen 4' sowie Seitenansichten C einer Förderkette 3' mit einer geschnittenen Darstellung eines Riemens 4'. Der Riemen 4' weist ein trapezförmiges Querschnittprofil auf. Die Förderkette 3' ist als Rollenkette mit Kettengliedern 32' und Rollen 33' ausgebildet. Die Kettenglieder 33' liegen im Bereich der ersten Führungsrolle 2' reibschlüssig über die Rollen 33' am Riemen 4' an. Die Breite des Riemens 4' ist kleiner als die Breite der Förderkette 3', so dass die Förderkette 3' mit den Laschen 34' der Kettenglieder 32' quer zur Förderrichtung über dem Riemen 4' hinaussteht. Der Riemen 4' ist in einer Nut 21' der ersten Führungsrolle 2' aufgenommen und weist eine ausreichende Höhe auf, so dass die Förderkette 3' beabstandet von der ersten Führungsrolle 2' über die erste Führungsrolle 2' läuft. Ein direkter Kontakt zwischen der Förderkette 3' und der ersten Führungsrolle 2' wird daher komplett vermieden. Verdeckte Bestandteile, wie die Nut 21' der ersten Führungsrolle 2' oder die Rollen 33' sind mit gestrichelten Linien angedeutet. Die Führungsrolle 2' weist einen Flansch 22' zum Verhindern des Herabfallens der Förderkette 3' auf.

Für den Fachmann ist es klar, dass die in den Figuren 1, 2, insbesondere Figuren 4a-4e sowie 5 beschriebenen Merkmale des Riemens auch auf nicht in den Figuren gezeigte Ausführungsformen mit zweiten Führungsrollen und Aussenriemen entsprechend angewendet werden können.

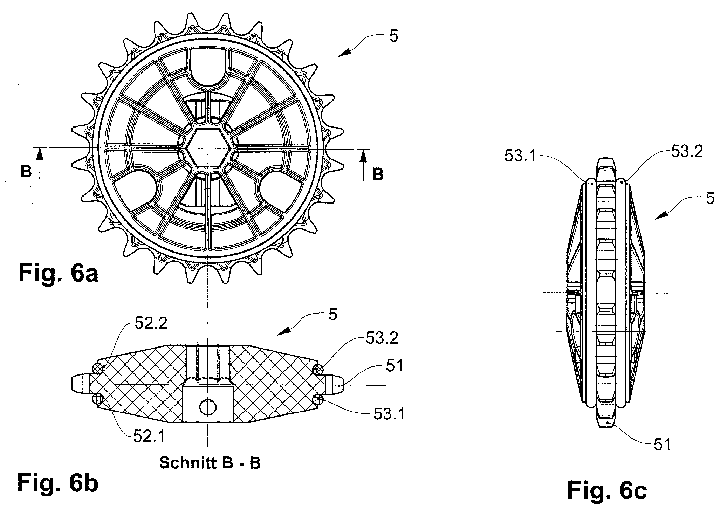

Fig. 6a zeigt eine Draufsicht eines Kettenrades 5 gemäss Fig. 1 mit Zähnen 51, welche zum Antrieb mit der Förderkette in Eingriff bringbar sind. Das Kettenrad 5 ist hauptsächlich aus Metall oder Kunststoff hergestellt.

Fig. 6b zeigt eine Schnittansicht des Kettenrades 5 aus Fig. 6a entlang der Schnittlinie B-B. Das Kettenrad 5 weist zwei umlaufende Nuten 52.1, 52.2 auf, in welche jeweils ein O-Ring 53.1, 53.2 aufgenommen ist. Zwischen den O-Ringen 53.1, 53.2 sind die Zähne 51 des Kettenrads 5 angeordnet. Die Förderkette gemäss Fig. 1 liegt beim Laufen über das Kettenrad 5 über die Laschen der Kettenglieder auf den O-Ringen 53.1, 53.2 auf.

Die Anordnung der O-Ringe 53.1, 53.2 ist auch in der Seitenansicht des Kettenrads 5 in Fig. 6c mit den Zähnen 51 zwischen den O-Ringen 53.1, 53.2 ersichtlich.

Mit der Hängefördervorrichtung umfassend einen Riemen und Dämpfungselementen ist es möglich, eine Schallreduktion von ca. 73 dBA auf ca. 52 dBA zu erreichen.

Fig. 7 zeigt eine Draufsicht einer Ausführungsform eines Riemens 4" mit Ausnehmungen 41", welche in regelmässigen Abständen angeordnet sind. Die Ausnehmungen 41 " sind mit Zähnen eines Kettenrads in Eingriff bringbar, so dass der Riemen 4"beim Laufen über das Kettenrad zwischen dem Kettenrad und der Förderkette angeordnet mit der Förderkette mitlaufen kann.

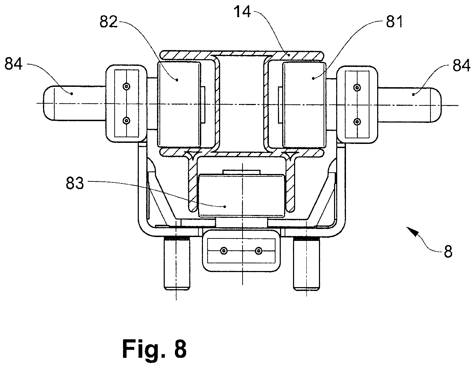

Fig. 8 zeigt eine Frontalansicht einer Ausführungsform einer Transporteinheit, welche als Laufwagen 8 ausgebildet ist. Der Laufwagen 8 weist Rollen 81, 82, 83 auf, mittels welchen der Laufwagen 8 an einer Laufschiene 14 förderbar ist. Die Laufschiene 14 ist in einer Schnittansicht gezeigt. Der Laufwagen 8 weist ferner Stifte 84 auf, welche seitlich des Laufwagens 8 angeordnet sind und in welche Mitnehmer der Förderkette zum Antrieb des Laufwagens 8 eingreifen können.

## Patentansprüche

1. Fördervorrichtung (100), umfassend eine Förderbahn (11, 12, 13, 14) und eine Mehrzahl von in der Förderbahn (11, 12, 13, 14) förderbaren Transporteinheiten (8), mindestens zwei erste Führungsrollen (2', 2.1-2.7) und eine Förderkette (3, 3'), welche über die mindestens zwei ersten Führungsrollen (2', 2.1-2.7) läuft und Mitnehmer (31) aufweist, über welche die Förderkette (3, 3') zum Antrieb der Transporteinheiten (8) mit den Transporteinheiten (8) lösbar in Eingriff bringbar ist, die Fördervorrichtung (100) ferner umfassend einen über die mindestens zwei ersten Führungsrollen (2', 2.1 -2.7) mit der Förderkette (3, 3') mitlaufenden Riemen (4, 4', 4", 4.1-4.5), wobei der Riemen (4, 4', 4", 4.1 -4.5) im jeweiligen Bereich der ersten Führungsrollen (2', 2.1-2.7) jeweils derart zwischen erster Führungsrolle (2', 2.1-2.7) und Förderkette (3, 3') angeordnet ist, dass die Förderkette (3, 3') am Riemen (4, 4', 4", 4.1-4.5) anliegt, wobei die Fördervorrichtung als Hängefördervorrichtung (100) ausgebildet ist.

2. Fördervorrichtung (100) nach Anspruch 1, **dadurch gekennzeichnet, dass** der Riemen (4, 4', 4", 4.1-4.5) derart ausgebildet ist, dass die Förderkette (3, 3') jeweils beabstandet von den ersten Führungsrollen (2', 2.1 -2.7) über die ersten Führungsrollen (2', 2.1-2.7) läuft.

3. Fördervorrichtung (100) nach Anspruch 1 oder 2, **dadurch gekennzeichnet, dass** die Förderkette (3, 3') ausgebildet ist, mit einer Fördergeschwindigkeit über die mindestens zwei ersten Führungsrollen (2', 2.1-2.7) zu laufen und der Riemen (4, 4', 4", 4.1-4.5) ausgebildet ist, mit einer im Vergleich zur Fördergeschwindigkeit der Förderkette (3, 3') kleineren oder gleichen Geschwindigkeit mit der Förderkette (3, 3') mitzulaufen.

4. Fördervorrichtung (100) nach einem der vorangehenden Ansprüche, **dadurch gekennzeichnet, dass** die Förderkette (3, 3') Kettenglieder (32, 32') aufweist, welche reibschlüssig am Riemen (4, 4', 4", 4.1-4.5) anliegen.

5. Fördervorrichtung (100) nach einem der vorangehenden Ansprüche, **dadurch gekennzeichnet, dass** die Förderkette (3, 3') als Rollenkette ausgebildet ist und mit Rollen (33, 33') am Riemen (4, 4', 4", 4.1-4.5) anliegt.

6. Fördervorrichtung (100) nach einem der vorangehenden Ansprüche, **dadurch gekennzeichnet, dass** der Riemen (4, 4', 4", 4.1-4.5) derart dimensioniert ist, dass die Förderkette (3, 3') im Bereich der ersten Führungsrollen (2', 2.1-2.7) quer zur Förderrichtung über den Riemen (4, 4', 4", 4.1-4.5) hinausstehend am Riemen (4, 4', 4", 4.1-4.5) anliegt.

7. Fördervorrichtung (100) nach einem der vorangehenden Ansprüche, **dadurch gekennzeichnet, dass** die ersten Führungsrollen (2', 2.1-2.7) jeweils mindestens eine Nut (21, 21') aufweisen, in welche der Riemen (4, 4', 4", 4.1-4.5) zumindest teilweise aufnehmbar ist.

8. Fördervorrichtung (100) nach einem der vorangehenden Ansprüche, **dadurch gekennzeichnet, dass** der Riemen (4, 4', 4", 4.1-4.5) eines der folgenden Querschnittprofile aufweist: trapezförmig, trapezförmig mit mindestens einer gewölbten Seite, kreisförmig, oval, hantelförmig, rechteckig, rechteckig mit mindestens einer gewölbten Seite.

9. Fördervorrichtung nach einem der vorangehenden Ansprüche, **dadurch gekennzeichnet, dass** der Riemen (4") Ausnehmungen (41"), vorzugsweise in regelmässigen Abständen, aufweist, wobei der Riemen (4, 4', 4", 4.1 -4.5) ausgebildet ist, mit einer im Vergleich zur Fördergeschwindigkeit der Förderkette (3, 3') gleichen Geschwindigkeit mit der Förderkette (3, 3') mitzulaufen.

10. Fördervorrichtung nach einem der vorangehenden Ansprüche, **dadurch gekennzeichnet, dass** der Riemen (4.2) einen Mantel (4.22) und einen Kern (4.21) aufweist, welche aus unterschiedlichem Material hergestellt sind.

11. Fördervorrichtung (100) nach einem der vorangehenden Ansprüche, **dadurch gekennzeichnet, dass** die Fördervorrichtung (100) mindestens eine zweite Führungsrolle (6, 6.1, 6.2) aufweist, über welche die Förderkette (3, 3') läuft und welche gegenläufig zu den ersten Führungsrollen (2', 2.1-2.7) angeordnet ist.

12. Fördervorrichtung nach Anspruch 11, **dadurch gekennzeichnet, dass** die Fördervorrichtung einen über die mindestens eine zweite Führungsrolle mit der Förderkette mitlaufenden Aussenriemen aufweist, welcher im jeweiligen Bereich der mindestens einen zweiten Führungsrolle derart zwischen zweiter Führungsrolle und Förderkette angeordnet ist, dass die Förderkette am Aussenriemen anliegt.

13. Fördervorrichtung (100) nach einem der vorangehenden Ansprüche, **dadurch gekennzeichnet, dass** die Fördervorrichtung (100) mindestens eine Weiche (1) umfasst, wobei die Förderkette (3, 3') mit Transporteinheiten in einer abzweigenden Förderbahn (11, 12, 13, 14) der Weiche (1) in Eingriff bringbar ist.

14. Fördervorrichtung (100) nach einem der vorangehenden Ansprüche, **dadurch gekennzeichnet, dass** die mindestens zwei ersten Führungsrollen (2', 2.1 -2.7) und/oder die mindestens eine zweite Führungsrolle (6, 6.1, 6.2) zumindest teilweise aus Kunststoff hergestellt sind bzw. ist, und/oder die mindestens zwei ersten Führungsrollen (2', 2.1 -2.7) und/oder die mindestens eine zweite Führungsrolle (6, 6.1 , 6.2) zahnlos ausgebildet sind bzw. ist.

## Claims

1. Conveying apparatus (100), comprising a conveying path (11, 12, 13, 14) and a plurality of transport units (8) which can be conveyed in the conveying path (11, 12, 13, 14), at least two first guide rollers (2', 2.1-2.7) and a conveying chain (3, 3') which runs over the at least two first guide rollers (2', 2.1-2.7) and comprises drivers (31), via which the conveying chain (3, 3') can be brought releasably into engagement with the transport units (8) in order to drive the transport units (8), the conveying apparatus (100)comprising, furthermore, a belt (4, 4', 4", 4.1-4.5) which runs together with the conveying chain (3, 3') over the at least two first guide rollers (2', 2.1-2.7), the belt (4, 4', 4", 4.1-4.5) being arranged in the respective region of the first guide rollers (2', 2.1-2.7) in each case between the first guide roller (2', 2.1-2.7) and the conveying chain (3, 3') in such a way that the conveying chain (3, 3') lies against against the belt (4, 4', 4", 4.1-4.5), wherein the conveying apparatus is an overhead conveying apparatus (100).

2. Conveying apparatus (100) according to Claim 1, **characterized in that** the belt (4, 4', 4", 4.1-4.5) is configured in such a way that the conveying chain (3, 3') runs over the first guide rollers (2', 2.1-2.7) in each case spaced apart from the first guide rollers (2', 2.1-2.7) .

3. Conveying apparatus (100) according to Claim 1 or 2, **characterized in that** the conveying chain (3, 3') is configured to run at a conveying speed over the at least two first guide rollers (2', 2.1-2.7), and the belt (4, 4', 4", 4.1-4.5) is configured to run together with the conveying chain (3, 3') at a speed which is lower than or identical to the conveying speed of the conveying chain (3, 3').

4. Conveying apparatus (100) according to one of the preceding claims, **characterized in that** the conveying chain (3, 3') comprises chain links (32, 32') which lie against the belt (4, 4', 4", 4.1-4.5) frictionally engaged.

5. Conveying apparatus (100) according to one of the preceding claims, **characterized in that** the conveying chain (3, 3') is configured as a roller chain and bears with rollers (33, 33') against the belt (4, 4', 4'', 4.1-4.5) .

6. Conveying apparatus (100) according to one of the preceding claims, **characterized in that** the belt (4, 4', 4'', 4.1-4.5) is dimensioned in such a way that, in the region of the first guide rollers (2', 2.1-2.7), the conveying chain (3, 3') lies against the belt (4, 4', 4'', 4.1-4.5) such that it projects beyond the belt (4, 4', 4", 4.1-4.5) transversely with respect to the conveying direction.

7. Conveying apparatus (100) according to one of the preceding claims, **characterized in that** the first guide rollers (2', 2.1-2.7) in each case have at least one groove (21, 21'), by which the belt (4, 4', 4", 4.1-4.5) is at least partially receivable.

8. Conveying apparatus (100) according to one of the preceding claims, **characterized in that** the belt (4, 4', 4'', 4.1-4.5) has one of the following cross-sectional profiles: trapezoidal, trapezoidal with at least one curved side, circular, oval, dumbbell-shaped, rectangular, rectangular with at least one curved side.

9. Conveying apparatus according to one of the preceding claims, **characterized in that** the belt (4'') comprises recesses (41"), preferably with regular spacings, wherein the belt (4, 4', 4", 4.1-4.5) is configured to run together with the conveying chain (3, 3') at a speed which is identical to the conveying speed of the conveying chain (3, 3').

10. Conveying apparatus according to one of the preceding claims, **characterized in that** the belt (4.2) has a shell (4.22) and a core (4.21) which are produced from different materials.

11. Conveying apparatus (100) according to one of the preceding claims, **characterized in that** the conveying apparatus (100) has at least one second guide roller (6, 6.1, 6.2), over which the conveying chain (3, 3') runs and which is arranged in an opposed manner with respect to the first guide rollers (2', 2.1-2.7).

12. Conveying apparatus according to Claim 11, **characterized in that** the conveying apparatus has an outer belt which runs together with the conveying chain over the at least one second guide roller and, in the respective region of the at least one second guide roller, is arranged between the second guide roller and the conveying chain in such a way that the conveying chain lies against the outer belt.

13. Conveying apparatus (100) according to one of the preceding claims, **characterized in that** the conveying apparatus (100) comprises at least one switch (1), wherein the conveying chain (3, 3') is brought into engagement with transport units in a branching conveying path (11, 12, 13, 14) of the switch (1).

14. Conveying apparatus (100) according to one of the preceding claims, **characterized in that** the at least two first guide rollers (2', 2.1-2.7) and/or the at least one second guide roller (6, 6.1, 6.2) are/is at least partially made from plastic, and/or the at least two first guide rollers (2', 2.1-2.7) and/or the at least one second guide roller (6, 6.1, 6.2) are/is toothless.

## Revendications

1. Dispositif de convoyage (100), comprenant une voie de convoyage (11, 12, 13, 14) et une pluralité d'unités de transport (8) pouvant être convoyées dans la voie de convoyage (11, 12, 13, 14), au moins deux premiers rouleaux de guidage (2', 2.1-2.7) et une chaîne de convoyage (3, 3'), laquelle se déplace au-dessus des au moins deux premiers rouleaux de guidage (2', 2.1-2.7) et comprennent des éléments d'entraînement (31) par le biais desquels la chaîne de convoyage (3, 3') peut être amenée en prise de manière libérable avec les unités de transport (8) pour entraîner des unités de transport (8), le dispositif de convoyage (100) comprenant en outre une courroie (4, 4', 4", 4.1-4.5) se déplacement conjointement avec la chaîne de convoyage (3, 3') au-dessus des au moins deux premiers rouleaux de guidage (2', 2.1-2.7), la courroie (4, 4', 4'', 4.1-4.5), dans la région respective des premiers rouleaux de guidage (2', 2.1-2.7), étant disposée respectivement entre le premier rouleau de guidage (2', 2.1-2.7) et la chaîne de convoyage (3, 3'), de telle sorte que la chaîne de convoyage (3, 3') s'appuie contre la courroie (4, 4', 4'', 4.1-4.5), le dispositif de convoyage étant réalisé sous forme de dispositif de convoyage aérien (100).

2. Dispositif de convoyage (100) selon la revendication 1, **caractérisé en ce que** la courroie (4, 4', 4'', 4.1-4.5) est réalisée de telle sorte que la chaîne de convoyage (3, 3') se déplace respectivement de manière espacée des premiers rouleaux de guidage (2', 2.1 -2.7) sur des premiers rouleaux de guidage (2', 2.1 -2.7).

3. Dispositif de convoyage (100) selon la revendication 1 ou 2, **caractérisé en ce que** la chaîne de convoyage (3, 3') est réalisée pour se déplacer à une vitesse de convoyage sur des au moins deux premiers rouleaux de guidage (2', 2.1-2.7) et la courroie (4, 4', 4", 4.1-4.5) est réalisée pour se déplacer conjointement avec la chaîne de convoyage (3, 3') à une vitesse inférieure ou égale à la vitesse de convoyage de la chaîne de convoyage (3, 3').

4. Dispositif de convoyage (100) selon l'une des revendications précédentes, **caractérisé en ce que** la chaîne de convoyage (3, 3') présente des maillons de chaîne (32, 32'), lesquels s'appuient contre la courroie (4, 4', 4", 4.1-4.5) avec engagement par friction.

5. Dispositif de convoyage (100) selon l'une des revendications précédentes, **caractérisé en ce que** la chaîne de convoyage (3, 3') est réalisée sous forme de chaîne à rouleaux et s'appuie par des rouleaux (33, 33') contre la courroie (4, 4', 4", 4.1-4.5).

6. Dispositif de convoyage (100) selon l'une des revendications précédentes, **caractérisé en ce que** la courroie (4, 4', 4", 4.1-4.5) est dimensionnée de telle sorte que la chaîne de convoyage (3, 3'), dans la région des premiers rouleaux de guidage (2', 2.1 -2.7), s'appuie contre la courroie (4, 4', 4'', 4.1-4.5) de manière à s'étendre au-delà de la courroie (4, 4', 4'', 4.1-4.5) transversalement à la direction de convoyage.

7. Dispositif de convoyage (100) selon l'une des revendications précédentes, **caractérisé en ce que** les premiers rouleaux de guidage (2', 2.1-2.7) présentent respectivement au moins une rainure (21, 21') dans laquelle la courroie (4, 4', 4", 4.1-4.5) peut être reçue au moins partiellement.

8. Dispositif de convoyage (100) selon l'une des revendications précédentes, **caractérisé en ce que** la courroie (4, 4', 4", 4.1-4.5) présente l'un des profils en section transversale suivants : trapézoïdal, trapézoïdal avec au moins un côté bombé, circulaire, ovale, en forme d'haltère, rectangulaire, rectangulaire avec au moins un côté bombé.

9. Dispositif de convoyage selon l'une des revendications précédentes, **caractérisé en ce que** la courroie (4'') présente des évidements (41''), de préférence à intervalles réguliers, la courroie (4, 4', 4", 4.1-4.5) étant réalisée pour se déplacer conjointement avec la chaîne de convoyage (3, 3') à une vitesse égale à la vitesse de convoyage de la chaîne de convoyage (3, 3').

10. Dispositif de convoyage selon l'une des revendications précédentes, **caractérisé en ce que** la courroie (4.2) présente une enveloppe (4.22) et une partie centrale (4.21), lesquelles sont fabriquées à partir de matières différentes.

11. Dispositif de convoyage (100) selon l'une des revendications précédentes, **caractérisé en ce que** le dispositif de convoyage (100) présente au moins un deuxième rouleau de guidage (6, 6.1, 6.2), au-dessus duquel la chaîne de convoyage (3, 3') se déplace et lequel est disposé de manière contrarotative par rapport aux premiers rouleaux de guidage (2', 2.1-2.7).

12. Dispositif de convoyage selon la revendication 11, **caractérisé en ce que** le dispositif de convoyage présente une courroie extérieure se déplaçant conjointement avec la chaîne de convoyage sur de l'au moins un deuxième rouleau de guidage, laquelle courroie extérieure est disposée dans la région respective de l'au moins un deuxième rouleau de guidage entre le deuxième rouleau de guidage et la chaîne de convoyage de telle sorte que la chaîne de convoyage s'appuie contre la courroie extérieure.

13. Dispositif de convoyage (100) selon l'une des revendications précédentes, **caractérisé en ce que** le dispositif de convoyage (100) comprend au moins un aiguillage (1), la chaîne de convoyage (3, 3') pouvant être amenée en prise avec des unités de transport dans une voie de convoyage (11, 12, 13, 14) bifurquant de l'aiguillage (1).

14. Dispositif de convoyage (100) selon l'une des revendications précédentes, **caractérisé en ce que** les au moins deux premiers rouleaux de guidage (2', 2.1-2.7) et/ou l'au moins un deuxième rouleau de guidage (6, 6.1, 6.2) est ou sont fabriqué(s) au moins partiellement à partir de matière synthétique, et/ou les au moins deux premiers rouleaux de guidage (2', 2.1-2.7) et/ou l'au moins un deuxième rouleau de guidage (6, 6.1, 6.2) est ou sont réalisé(s) sans dents.
